(19) Europäisches Patentamt
European Patent Office
Office européen des brevets

(11) **EP 1 906 220 A2**

(12) **EUROPÄISCHE PATENTANMELDUNG**

(43) Veröffentlichungstag:
**02.04.2008 Patentblatt 2008/14**

(51) Int Cl.:
**G02B 6/02** *(2006.01)*

(21) Anmeldenummer: 07018377.7

(22) Anmeldetag: **19.09.2007**

(84) Benannte Vertragsstaaten:
**AT BE BG CH CY CZ DE DK EE ES FI FR GB GR
HU IE IS IT LI LT LU LV MC MT NL PL PT RO SE
SI SK TR**
Benannte Erstreckungsstaaten:
**AL BA HR MK YU**

(30) Priorität: **29.09.2006 DE 102006046313**

(71) Anmelder:
• **Fraunhofer-Gesellschaft zur
Förderung der angewandten Forschung e.V.
80686 München (DE)**
• **Friedrich-Schiller-Universität Jena
07743 Jena (DE)**

(72) Erfinder:
• **Fuchs, Ulrike
07747 Jena (DE)**

• **Zeitner, Uwe, Dr.
99423 Weimar (DE)**
• **Tünnermann, Andreas, Prof. Dr.
99425 Weimar (DE)**
• **Thomas, Jens Ulrich, Dipl.-Phys.
07743 Jena (DE)**
• **Wikszak, Elodie, Dipl.-Phys.
07743 Jena (DE)**
• **Nolte, Stefan, Prof. Dr.
07743 Jena (DE)**

(74) Vertreter: **Pfenning, Meinig & Partner GbR
Patent- und Rechtsanwälte
Theresienhöhe 13
80339 München (DE)**

(54) **Verfahren zum Strukturieren von lichtleitenden Fasern entlang deren Längsachse (longitudinale Strukturierung) basierend auf der nicht-linearen Absorption von Laserstrahlung**

(57) Die vorliegende Erfindung bezieht sich auf ein Verfahren zum Strukturieren einer lichtleitenden Faser entlang deren Längsachse. Hierbei wird mittels eines Lasers la ein Laserstrahl 1 durch eine Fokussieroptik 2 gestrahlt und auf die Oberfläche einer Faser 3 gerichtet. Das Verfahren ist dadurch gekennzeichnet, dass die Rayleighlänge p des aus Laser la und Fokussieroptik 2 bestehenden optischen Systems so eingestellt wird, dass das Minimum der auf die dem optischem System zugewandte Seite 3a der Faseroberfläche bezogenen Strahltaillenposition des an der Faseroberfläche gebrochenen Laserstrahls (minimale Fokusposition) in den Bereich des Faserkerns 4 fällt. Die Erfindung bezieht sich darüberhinaus ebenfalls auf eine Anordnung zur Ausführung des erfindungsgemäßen Verfahrens.

Fig. 2a

EP 1 906 220 A2

**Beschreibung**

Die vorliegende Erfindung bezieht sich auf ein Verfahren zum Strukturieren einer lichtleitenden Faser entlang deren Längsachse sowie eine Anordnung, mit der das Verfahren ausgeführt werden kann. Das Verfahren und die Anordnung beziehen sich insbesondere auf die longitudinale Strukturierung von Fasergittern.

Fasergitter sind Schlüsselkomponenten für optische Telekommunikations-Systeme und Sensorik-Anwendungen. Sie stellen günstige, flexible und integrierte Komponenten dar, mit denen man das optische Transmissionsspektrum beliebig filtern kann. In den letzten Jahren werden Fasergitter auch für hochintegrierte Faserlaser angewendet. Etablierte Techniken zur Herstellung von Fasergittern stoßen insbesondere bei Hochleistungslasern aber an ihre Grenzen.

Klassische Techniken zur Herstellung von Fasergittern basieren auf der Bestrahlung eines photosensitiven Faserkerns mit UV-Laserlicht. Einerseits setzt dies eine chemische Vorbehandlung des Faserkerns (Dotierung oder Anreicherung mit Wasserstoff) voraus, welche die Wahl des Fasermaterials einschränkt (für den Fall der Dotierung) oder es ist eine Nachbehandlung (wie Tempern) der Faser erforderlich, um das Gitter zu stabilisieren. Bei aktiven Fasern und photonischen Kristallfasern ist die Dotierung technisch schwer zu realisieren. Hinzu kommt, dass Gitter in photosensitivem Material bei hohen Lichtleistungen ausbleichen können.

Daher wurden in jüngerer Zeit Fasergitter in nichtphotosensitiven Fasern hergestellt, wobei die Herstellung auf nichtlinearer Absorption von ultrakurzer Laserstrahlung basiert. Diese Strukturänderung setzt eine hinreichend hohe Leistungsdichte voraus, die nur im Laserfokus erreicht wird. Das bedeutet, dass - im Gegensatz zu herkömmlichen Techniken - der Laserfokus innerhalb der Faser präzise auf den Faserkern ausgerichtet werden muss. Die Positionierung ist daher kritisch für ein erfolgreiches Strukturieren mit ultrakurzer Laserstrahlung.

Bei der Herstellung von Fasergittern in nichtphotosensitiven Fasern erfolgt die Positionierung der Faser bisher basierend auf der Detektion des transmittierten Laserlichts hinter der Faser oder am Faserende, mit Photodioden oder Photomultipliern oder unter Verwendung von zwei Kameras. Um die Brechzahlveränderung auf den Kern zu beschränken, wurden klassische Techniken, wie Anreicherung des Kerns mit Wasserstoff, demonstriert. Solche Methoden setzen jedoch eine Vor- und Nachbehandlung der Faser voraus.

Aufgabe der vorliegenden Erfindung ist es daher, ein Strahlformungs- und Positionierungsverfahren zum longitudinalen Strukturieren von lichtleitenden Fasern (welches auf der nicht-linearen Absorption von Laserstrahlung basiert) zur Verfügung zu stellen, welches auf einfache Art und Weise eine präzise Ausrichtung des Laserfokus auf den Faserkern ermöglicht, welches also eine einfache Ausrichtung des optischen Systems auf die Faser erlaubt und möglichst unempfindlich gegen Dejustierungen bzw. Verschiebungen einzelner Komponenten aus der Ausrichtungsposition ist. Aufgabe der vorliegenden Erfindung ist es darüberhinaus, eine entsprechende Anordnung zur Durchführung des erfindungsgemäßen Verfahrens zur Verfügung zu stellen.

Die Lösung der vorliegenden Aufgabe basiert zunächst auf der grundlegenden Idee, den Beitrag, den die Krümmung der Faser zur Fokussierung liefert, bei der Auslegung des optischen Systems entsprechend zu berücksichtigen. Dies wurde bisher nicht mit einbezogen, insbesondere auch, weil bei starker Fokussierung der Laserstrahlung der Einfluss der Faserkrümmung nur gering ist. Darauf aufbauend wurde dann der Einfluss des Abstands zwischen Faser und Fokussierungsoptik auf die Fokusposition innerhalb der Faser soweit wie möglich begrenzt. Dieses wird erreicht, indem die Rayleighlänge des optischen Systems geeignet gewählt wird, wie es nachfolgend noch genauer beschrieben ist. Durch diese geeignete Wahl der Rayleighlänge wird die resultierende Fokusposition unempfindlicher gegenüber einer Variation des Abstands zwischen Faser und Fokussierlinse.

Die erfindungsgemäße Einbeziehung des Beitrags der Faserkrümmung zur Fokussierung und der geeigneten Wahl der Rayleighlänge des optischen Systems hat die folgenden Vorteile gegenüber der Vorgehensweise nach dem Stand der Technik:

• Wie im nachfolgenden Ausführungsbeispiel noch näher beschrieben, zeigt sich, dass die Positionierung des Fokus in den Faserkern aufgrund der geeigneten Rayleighlängenwahl wesentlich erleichtert wird, da die Anforderungen an die Positioniergenauigkeit deutlich geringer sind.

• Zudem kann durch die entsprechende Optik (geeignete Rayleighlänge) garantiert werden, dass die Brechzahländerungen nur in einem definierten Bereich der Faser stattfinden.

• Bei Einsatz des erfindungsgemäßen Verfahrens mit gleichzeitiger Lumineszenzkontrolle kann eine einfache und reproduzierbare Justage des Systems erfolgen.

• Hierdurch wird die Positionierung (Ausrichtung des optischen Systems auf die Faser) und damit die Fabrikation der longitudinal strukturierten, lichtleitenden Fasern erheblich erleichtert.

Die Erfindung wird nun anhand des nachfolgenden Ausführungsbeispiels ausführlich beschrieben. Hierbei zeigt:

Figur 1　　den Basisaufbau eines erfindungsgemäßen Systems,

Figur 2　　wie die geeignete Rayleighlänge erfindungsgemäß festgelegt wird,

Figur 3　　einen weiteren Aspekt zur erfindungsgemäßen Festlegung der Rayleighwellenlänge,

Figur 4    die Ergebnisse einer numerischen Simulation zur Beeinflussung der Position des Fokus innerhalb der Faser durch die Ausrichtung von der Faser zur Fokussierungsoptik,

Figur 5    die Ausrichtung des optischen Systems auf die Faser mit Hilfe eines Detektors zur Lumineszenzerfassung.

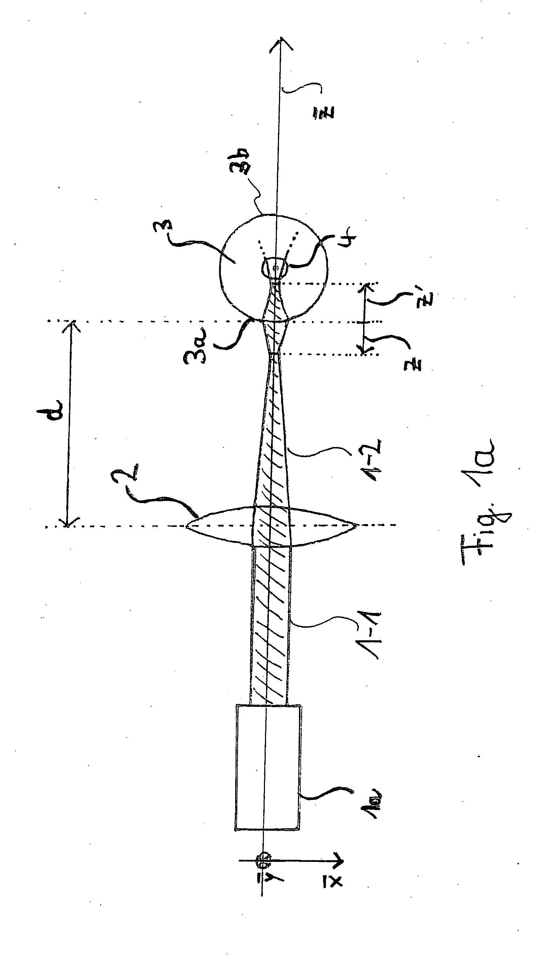

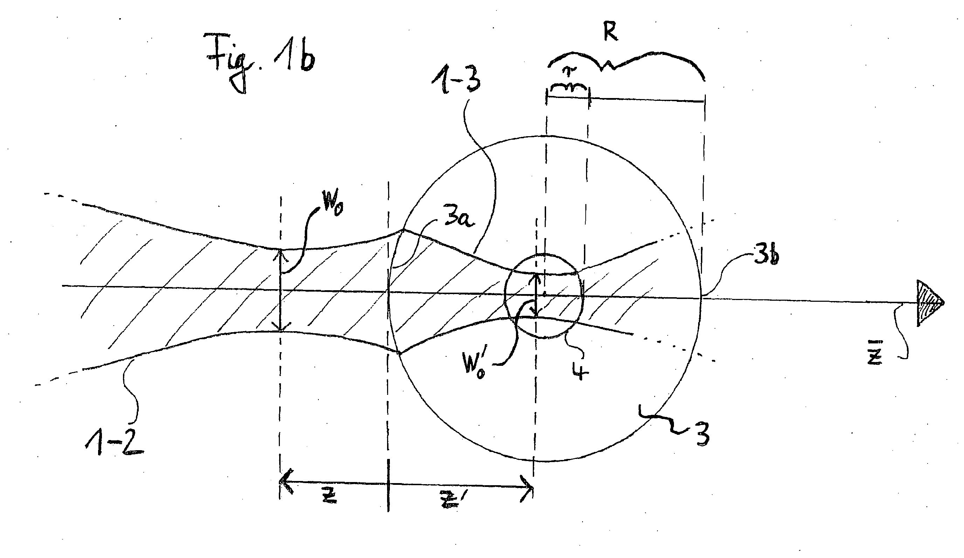

Figur 1 zeigt den grundlegenden Aufbau eines Strahlformungs- und Positionierungssystems, wie es zur Durchführung eines Strukturierungsverfahrens nach der vorliegenden Erfindung verwendet werden kann. Figur 1B zeigt hierbei eine Detaildarstellung der Figur 1A.

Die grundlegenden Komponenten des Systems sind ein Laser 1a, eine Fokussieroptik 2 (hier: sphärische Linse) und die zu strukturierende, lichtleitende Faser 3. Der Laser 1a, die Linse 2 und das Zentrum der Faser 3 sind hierbei auf eine gemeinsame optische Achse $\bar{z}$ ausgerichtet. Die gezeigte Schnittansicht zeigt die Faser 3 in einem Schnitt senkrecht zu ihrer Zentralachsrichtung. Die Zentralachse der Faser 3 verläuft somit im gezeigten Fall senkrecht zur Schnittebene und fällt aufgrund der Ausrichtung auf die gemeinsame optische Achse $\bar{z}$ mit der Richtung der Koordinatenachse $\bar{y}$ des kartesischen Systems $\bar{x}, \bar{y}, \bar{z}$ zusammen.

Der vom Laser 1a erzeugte Laserstrahl 1 wird durch die Fokussieroptik 2 gestrahlt und auf die Faser 3 gerichtet. Der Abschnitt des Laserstrahls vor seiner Fokussierung durch die Linse 2 ist hier mit 1-1 bezeichnet. Derjenige Abschnitt des Laserstrahls, welcher auf die Oberfläche 3a der Faser 3 gerichtet wird, ist hier mit 1-2 bezeichnet. Die Oberfläche 3a ist derjenige Oberflächenabschnitt der Faser 3, welcher auf der optischen Achse in der dem optischen System 1, 2 zugewandten Richtung angeordnet ist. Der Oberflächenabschnitt 3b bezeichnet daher denjenigen Abschnitt der Oberfläche der Faser, welcher auf der dem optischen System 1, 2 gegenüberliegenden, also abgewandten Seite auf der optischen Achse $\bar{z}$ angeordnet ist. Mit 4 ist der Faserkern bezeichnet.

Wie Figur 1B in einer vergrößerten Detaildarstellung zeigt, ist der Radius des Faserkerns mit r bezeichnet. R stellt demgegenüber den Radius der gesamten Faser 3 dar. Die Detailansicht erklärt desweiteren wesentliche Größen des Laserstrahls 1 bevor er an der Faseroberfläche 3a gebrochen wird (Laserstrahlabschnitt 1-2) und des an der Faseroberfläche gebrochenen Laserstrahls (Laserstrahlabschnitt 1-3). Dies betrifft zunächst die beiden Größen z und z', welche ausgehend von dem Oberflächenabschnitt 3a entlang der optischen Achse $\bar{z}$ gemessen werden. Die Größe z bezeichnet hierbei die Strahltaillenposition (Position des geringsten Strahlquerschnitts) des auf die Oberfläche 3a einfallenden Laserstrahls 1-2. z' bezeichnet die Strahltaillenposition des an der Oberfläche 3a der Faser 3 gebrochenen Laserstrahls 1-3 (Strahltaillenposition innerhalb der Faser). Der Durchmesser der entsprechenden Strahltaillen senkrecht zur optischen Achse ist hierbei durch $W_0$ bzw. $W'_0$ bezeichnet.

Die Fokuslage z' innerhalb der Faser hängt nun entscheidend von der Kombination aus der Fokussierungsoptik 2 und der Krümmung der Faseroberfläche 3a sowie dem Abstand zwischen der Fokussierungsoptik 2 und der Oberfläche 3a ab (dieser Abstand ist mit d bezeichnet). Hinsichtlich der Abhängigkeit von der Fokussierungsoptik ist die Rayleighlänge des optischen Systems 1, 2 bzw. des fokussierten Laserstrahls der entscheidende Parameter: Die Rayleighlänge ρ gibt an, in welchem Abstand von der Strahltaille Wo sich der Strahldurchmesser um den Faktor $\sqrt{2}$ aufweitet.

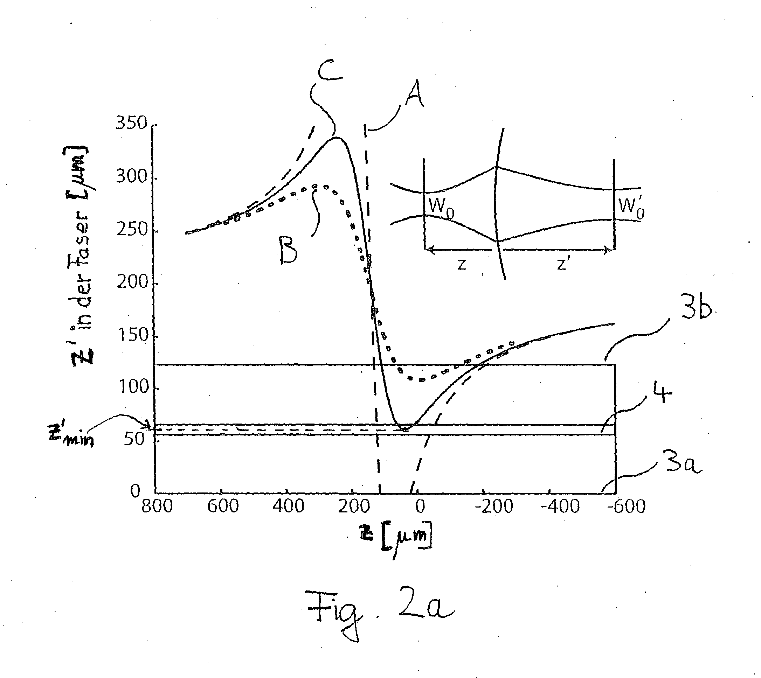

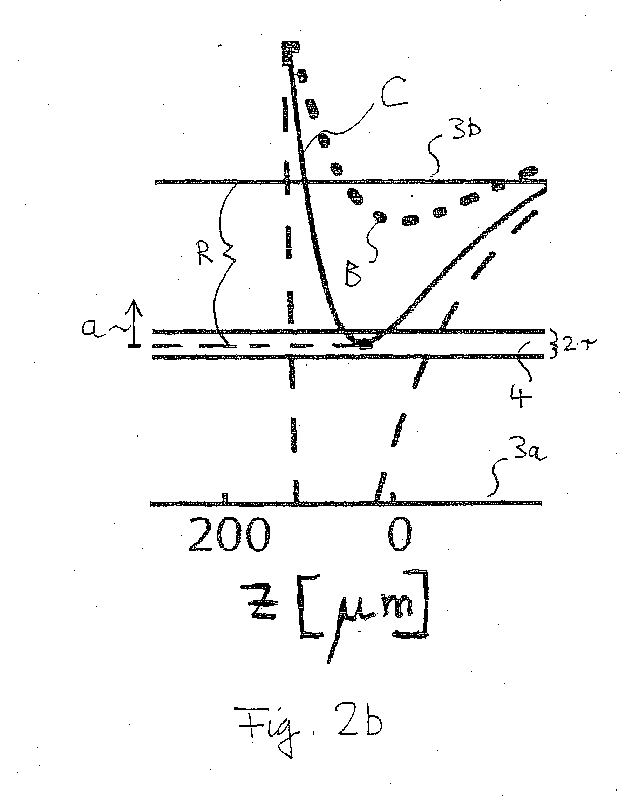

Diese Abhängigkeit zeigt die in Figur 2 gezeigte Graphik genauer. Hierbei ist die Strahltaillenposition des einfallenden, noch nicht an der Oberfläche 3a gebrochenen Laserstrahls 1-2 (Größe z auf der Abzisse) gegen die Strahltaillenposition z' innerhalb der Faser des an der Faseroberfläche gebrochenen Laserstrahls 1-3 gezeigt (z' auf der Ordinate). Bei einer sehr starken Fokussierung der Laserstrahlung (was einer kleinen Rayleighlänge entspricht) ist der Einfluss der Faseroberfläche 3a auf den Laserstrahl 1-2 vernachlässigbar. Die Position des Fokus z' kann somit frei in der Faser 3 ausgewählt werden (gestrichelte Linie A in Figur 2). Ist demgegenüber die Fokussierung relativ schwach (gleichbedeutend mit einer großen Rayleighlänge), so wird die wesentliche Fokussierungswirkung durch die gekrümmte Faseroberfläche 3a hervorgerufen. Ist hierbei die zugehörige Rayleighlänge zu groß (gepunktete Linie B) liegt der Fokus z' (und damit die Strahltaille $W_0$') auf jeden Fall, also unabhängig von der Entfernung d der Optik 2 zur Faser 3, in Bezug auf das optische System 1, 2 gesehen hinter dem Faserkern 4. Die für die Strukturierung der Faser 3 notwendige Fokussierung in den Faserkern 4 (z.B. zur Erzeugung von faseroptischen Bragg-Gittern) ist somit in diesem Fall nicht möglich.

Je nachdem, wie die Rayleighlänge ρ des optischen Systems 1, 2 gewählt wird, ergibt sich nun, wie Figur 2 zeigt, eine andere Abhängigkeit der Position z' des Fokus in der Faser von der Position z des Fokus des noch nicht gebrochenen Laserstrahls (Funktion z'(z)). Ist die Fokussierung nicht zu stark ausgeprägt (also die Rayleighlänge nicht zu klein), so tritt bei diesem Zusammenhang der Größen z und z' ein Minimum auf (Kurven B und C). Die Lage dieses Minimums (auf der optischen Achse $\bar{z}$ gesehen) in Bezug auf die Faseroberfläche 3a wird nachfolgend auch als minimale Position des Fokus bzw. als $z'_{min}$ bezeichnet. Sie ist in Figur 2 für die Kurve C eingezeichnet.

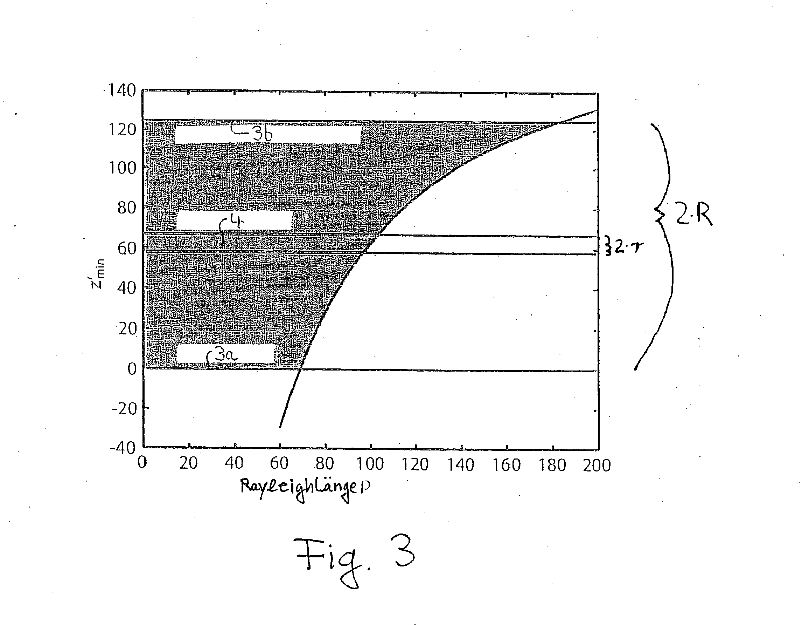

Wie Figur 3 zeigt, ist die minimale Position des Fokus $z'_{min}$ (Ordinate) in Bezug auf die Faseroberfläche 3a von der Rayleighlänge ρ (Abszisse) des einfallenden Laserstrahls abhängig. Die Kurve C in Figur 2 zeigt hierbei genau denjenigen Fall, in dem die Rayleighlänge so gewählt wurde, dass die minimale Position des Fokus genau im Zentrum des Faserkerns 4 zum Liegen kommt. Wie nachfolgend noch näher beschrieben wird, ist dies gerade diejenige Wahl, um das erfindungsgemäße Verfahren optimal zu realisieren.

Wie Abbildung 1 zu entnehmen ist, legt der Abstand d zwischen Fokussierungsoptik 2 und Faseroberfläche 3a (zusammen mit der Strahlqualität und der Brennweite der Linse 2) den Abstand z der Fokusposition des noch ungebrochenen Laserstrahls 1-2 von der Faseroberfläche 3a fest. Wie man nun Figuren 2 und 3 entnimmt, kann der Einfluss des Abstands zwischen Faser und Fokussierungsoptik auf die Fokusposition z' innerhalb der Faser durch geeignete Wahl der Rayleighlänge eingeschränkt werden. Wird nämlich die Rayleighlänge genau so gewählt, dass die Position $z'_{min}$ innerhalb des Faserkerns 4 zum Liegen kommt, so wird die resultierende Fokusposition z' unempfindlicher gegenüber dem Abstand d zwischen Faser 3 und Fokussierungslinse 2. Erfindungsgemäß wird somit die Rayleighlänge gerade so gewählt, dass die minimale Fokusposition $z'_{min}$ bezüglich der Faseroberfläche 3a in den Faserkern 4 fällt. Idealerweise ist die Position $z'_{min}$ gerade so zu wählen, dass der Abstand a (siehe Figur 2b) dieser Position vom Zentrum des Faserkerns 4 gerade 0 ist. Jedoch bewirkt auch ein Verhältnis a/r (r Radius des Faserkerns) von 1 oder geringer bereits eine sehr gute Unempfindlichkeit von der Position z' gegenüber einer Änderung des Abstands d. Erfindungsgemäß wird somit die bezogen auf die optische Achse $\bar{z}$ bestimmte minimale Fokusposition $z'_{min}$ gerade so gelegt, dass sie in den Faserkern fällt. Die minimale Fokusposition ist dabei diejenige Position, welche bei Ausrichtung von Laser 1, Fokussieroptik 2 und Zentrum des Faserkerns 4 auf einer gemeinsamen optischen Achse bei einer Variation der Strahltaillenposition z (bzw. bei einer Variation des Abstands d) festgestellte Fokusposition z', welche gleichzeitig einen möglichst geringen Abstand von der Faseroberfläche 3a aufweist und einem Minimalwert des z'(z)-Zusammenhangs entspricht. Bei der erfindungsgemäß optimalen Wahl der Rayleighlänge ρ (Kurve C in Figur 2) ist der mögliche Bereich für den Fokus innerhalb der Faser 3 somit auf eine Hälfte der Faser (Halbzylinder der Faser, welcher der Oberfläche 3b zugewandt ist) beschränkt. Bei dieser Rayleighlänge ρ sind somit nur Fokuspositionen z' im Bereich des Kerns (bei Ausrichtung des optischen Systems 1, 2 auf die Faser 3 bzw. Wahl der Fokusposition z des Strahls 1-2 so, dass die Fokusposition z' im Minimum zu liegen kommt), im Bereich der dem optischen System 1, 2 abgewandten Seite der Faser und vom optischen System 1, 2 aus gesehen hinter der Faser möglich.

Die gemäß vorliegender Erfindung optimale Wahl der Rayleighlänge ρ kann aus dem Faserradius R und dem Brechungsindex n der Faser (genauer gesagt, der Faserhülle; es kann jedoch für die Abschätzung auch der Brechungsindex des Faserkerns verwendet werden)

mit $\rho = \dfrac{n * \bar{R}}{2 * (n-1)}$ abgeschätzt werden.

Diesem Fall entspricht die Kurve C in Figur 2. Auf diese Weise liegt der Umkehrpunkt von fokussierender und defokussierender Wirkung der Faseroberfläche 3a genau bei der gewünschten Fokusposition im Faserkern, was die Positionierung bzw. Ausrichtung des optischen Systems auf die Faser möglichst leicht gestaltet. Mit anderen Worten bewirkt eine Verschiebung der Fokuslage z bzw. des Abstands d aus derjenigen Position (optimale Ausrichtung des Systems 1, 2 auf die Faser), bei der die Fokusposition z' die Minimumlage $z'_{min}$ einnimmt, nur eine geringfügige Verschiebung der Fokusposition z', so dass die optimale Fokussierung hier ein Maximum an Stabilität erreicht.

In einem konkreten Fall wurde erfindungsgemäß der Faserkern 4 einer Standardtelekomfaser (Faserkerndurchmesser 2r = 9 μm, Manteldurchmesser bzw. Durchmesser 2R = 125 μm, Brechungsindex n = 1,453) strukturiert. Mittels der Gaussstrahloptik (oben genannte Formel) wurde errechnet, wie der mögliche Fokussierungsbereich innerhalb der Faser von der Rayleighlänge ρ abhängt. Damit der Fokussierungsbereich auf eine Hälfte der Faser (der Oberfläche 3b zugewandte Hälfte) der Faser beschränkt ist und den Faserkern beinhaltet (damit somit das Minimum im Faserkern zu liegen kommt) muss in diesem Fall eine Rayleighlänge von 100 μm gewählt werden. Um diese Rayleighlänge mit einem Laser zu realisieren, der einen Strahldurchmesser von 4,8 mm bei einer Wellenlänge von 800 nm hat, wurde eine Linse mit einer Brennweite von 40 mm benutzt. Diese Brennweite ist jedoch nur ein grober Richtwert: Bei der Wahl der Linse muss das komplette optische System (Laser 1 samt Fokussierungssystem 2) mit den Geometrien der einzelnen Bauteile berücksichtigt werden, um letztendlich die korrekte Rayleighlänge ρ zu erhalten. Eine solche Berücksichtigung ist mit Hilfe einer numerischen Simulation mittels kommerzieller Raytracer, wie z.B. ZEMAX®; OSLO® oder Code V, möglich.

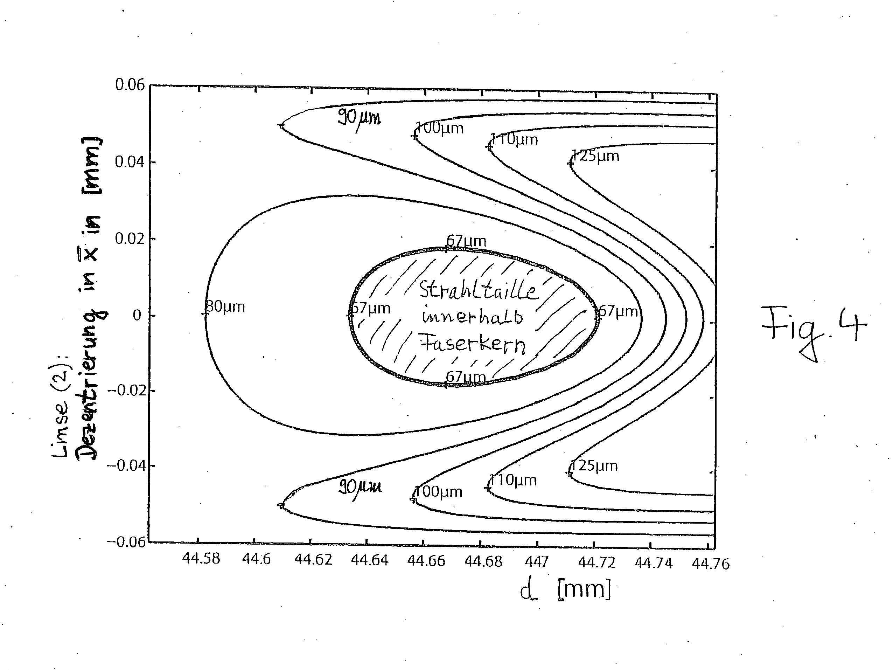

Figur 4 zeigt das Ergebnis einer solchen numerischen Simulation für eine Faser mit n = 1.453 und einem Radius von R = 62,5 μm. Die Grenzen des Faserkerns mit Radius r = 9 μm liegen bei z' = 58 μm und z' = 67 μm. Die Figur zeigt eine Höhenliniendarstellung der Fokusposition z' innerhalb der Faser in Abhängigkeit vom Abstand d von Linse 2 zur Oberfläche 3a (horizontale Achse) und von der Dezentrierung der Linse in Richtung senkrecht zur optischen Achse und zur Zentralachse der Faser (Richtung $\bar{x}$ in Figur 1A, vertikale Achse). Das Simulationsergebnis zeigt, wie die Ausrichtung von der Faser 3 zur Fokussierungsoptik 2 die Position des Fokus z' innerhalb der Faser beeinflusst. Ist der Fokus z' weniger als 67 μm von der Faseroberfläche entfernt, so reicht er in den Faserkern 4 hinein. Die Simulation zeigt auch, dass der Fokus nicht näher als 58 μm an die Faseroberfläche 3a gelangen kann. Eine Strukturierung der oberen Hälfte der Faser (des der Laserquelle 1 zugewandten Halbzylinders der Faser 3) ist nicht möglich.

Erfindungsgemäß kann die Rayleighlänge ρ des Laserstrahls im Fokus dabei durch die Wahl der Wellenlänge λ des Lasers, der Brennweite der Fokussierungsoptik 2, des Strahldurchmessers des Laserstrahls 1 und/oder der Strahlenqualität des Laserstrahls beeinflusst werden. Unter Strahlenqualität ist hierbei die Beugungsmaßzahl $M^2$ zu verstehen, wie sie in der ISO-Vorschrift 11146 definiert wird.

Zur Ausrichtung des optischen Systems 1, 2 auf die Faser 3 (also zur Einstellung eines solchen Abstands d bzw. einer solchen Fokusposition z, dass die Fokusposition z' im Minimum $z'_{min}$ zum Liegen kommt, vergleiche Kurve C in Figur 2) wird die Faser durch das optische System mit ultrakurzen Pulsen geringer Leistung bestrahlt. Die Bestrahlung zur Ausrichtung erfolgt mit einer Leistung knapp unter der Schwellleistung für eine permanente Brechzahländerung. Im konkret dargestellten Fall wurden 100 mW zum Ausrichten und 600 mW zum endgültigen Strukturieren verwendet (bei einer Pulsdauer von 50 Femtosekunden).

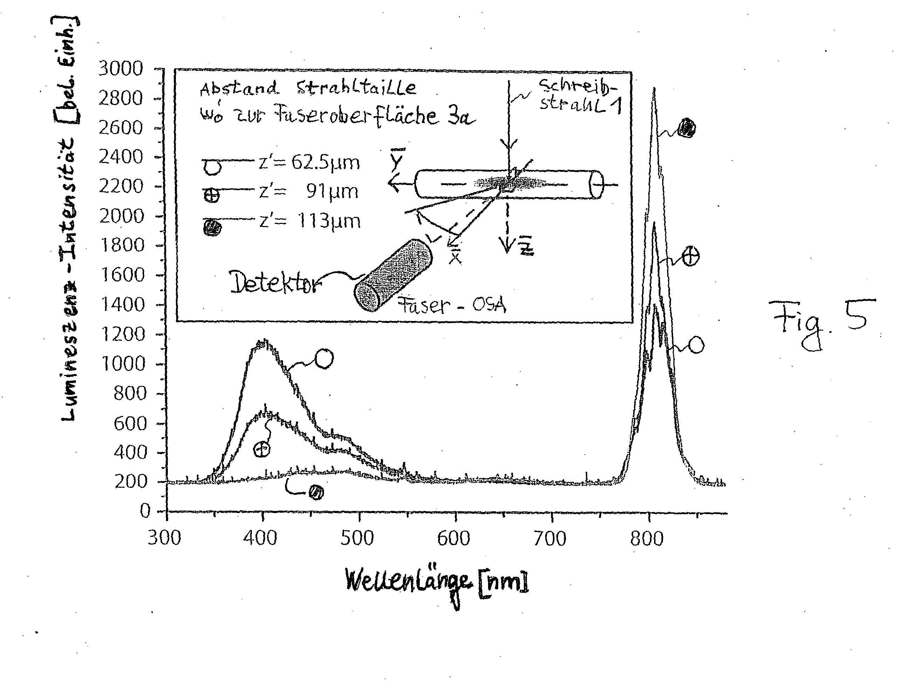

Durch eine solche Bestrahlung ergibt sich eine charakteristische Lumineszenz im sichtbaren Spektralbereich. Wenn sich der Laserfokus des Strahls 1-3 im Faserkern 4 befindet, ist dieses Lumineszenzleuchten am stärksten. Es kann wie in Figur 5 skizziert mit einem Detektor (Photodiode, Photomultiplier oder Spektrometer) senkrecht zur Längsachse der Faser 3 und zum anregenden bzw. strukturierenden Laserstrahl 1 gemessen werden. In einer alternativen Ausgestaltungsform ist es möglich, dieses Lumineszenzleuchten an einem der Faserenden zu erfassen, wenn das Lumineszenzlicht von der Faser geführt wird. Im konkret gezeigten Fall entspricht eine Fokuslage von z' = 62,5 μm einer Fokuslage im Bereich des Faserkerns. Die gemessene Lumineszenz-Intensität im sichtbaren Spektralbereich zwischen 380 und 550 μm ist daher bei dieser Fokuslage am größten (o-Kurve). OSA steht in Fig. 5 für "Optical spectrum analyzer" (Spektrometer).

Wie die vorstehenden Ausführungen zeigen, wird die Positionierung des Fokus z' im Kern 4 der Faser mit einer geeigneten Optik 1, 2 (erfindungsgemäße Wahl der Rayleighlänge p) wesentlich erleichtert, da die Anforderungen an die Positioniergenauigkeit deutlich geringer sind. Durch die erfindungsgemäße Ausgestaltung des Verfahrens kann zudem garantiert werden, dass die Brechzahländerung innerhalb der Faser nur in einem genau definierten Bereich stattfinden kann. Für das genannte Ausführungsbeispiel bedeutet dies, dass entlang der optischen Achse nur noch auf 100 μm genau und senkrecht zu ihr (x-Richtung) nur auf 40 μm genau positioniert werden muss (vgl. Figur 4). Durch die erfindungsgemäße Wahl der Rayleighlänge ρ des zum Strukturieren benutzten Laserstrahls 1 werden somit die Positionierung und damit die Fabrikation von strukturierten Fasern erheblich erleichtert. Durch das Verfahren der Faser oder der Fokussierungsoptik mit gleichzeitiger Lumineszenzkontrolle (vgl. Figur 5) kann eine einfache und reproduzierbare Justage des Systems erfolgen.

Das erfindungsgemäße Positionierungs- und Strahlformungsverfahren lässt sich auf beliebige longitudinale Strukturierungen von lichtleitenden Faser anwenden: So können beispielsweise Stufenindexfasern, Gradientenindexfasern, mikrostrukturierte Fasern, Doppelkernfasern oder Hohlkernfasern strukturiert werden. Die Fasern können dabei dotierte oder undotierte Fasern sein. Aktive wie passive Fasern können strukturiert werden.

Ein besonders vorteilhaftes Ziel der Strukturierung sind dabei Fasergitter: Eine periodische oder eine gechirpt periodische oder quasi periodische Brechzahländerung des Kerns oder eine gezielte Zerstörung im Faserkern ist möglich. Die Technik ermöglicht faserinterne, dielektrische Spiegel (sog. Faser-Bragg-Gitter), Modenkoppler, Gitter mit langer Periode (engl. "long period grating) und Dispersionsgitter.

Solchermaßen longitudinal strukturierte Fasern finden viele Anwendungsgebiete von Sensorik über Telekommunikation bis hin zu hoch integrierten Faserlasern. Periodische und quasi periodische Gitter können auch benutzt werden, um mittels Quasiphasenanpassung nicht-lineare Effekte in Fasern zu begünstigen (z.B. Erzeugung der zweiten und dritten harmonischen).

**Patentansprüche**

1.  Verfahren zum Strukturieren einer lichtleitenden Faser (3) entlang deren Längsachse, wobei
    mittels eines Lasers (1a) ein Laserstrahl (1) durch eine Fokussieroptik (2) gestrahlt und auf die Oberfläche der Faser (3) gerichtet wird,
    *dadurch gekennzeichnet, dass*
    die Rayleighlänge ρ des aus Laser (1a) und Fokussieroptik (2) bestehenden optischen Systems so eingestellt wird, dass das Minimum $z'_{min}$ der auf die dem optischen System zugewandte Seite (3a) der Faseroberfläche bezogenen Strahltaillenposition $z'$ des an der Faseroberfläche gebrochenen Laserstrahls (minimale Fokusposition) in den Bereich des Faserkerns (4) fällt.

2.  Verfahren nach dem vorhergehenden Anspruch,
    *dadurch gekennzeichnet, dass*
    das Verhältnis $|a/r|$ von Abstand a der minimalen Fokusposition $z'_{min}$ vom Zentrum des Faserkerns und von Radius r des Faserkerns (4) kleiner als 2.0, bevorzugt kleiner als 1.5, bevorzugt kleiner als 1.0, bevorzugt kleiner als 0.75, bevorzugt kleiner als 0.5, bevorzugt kleiner als 0.25 ist.

3.  Verfahren nach einem der vorhergehenden Ansprüche,
    *dadurch gekennzeichnet, dass*
    die Abweichung der Rayleighlänge ρ von

$$\frac{n \cdot R}{2(n-1)}$$

kleiner als 50%, bevorzugt kleiner als 20%, bevorzugt kleiner als 10%, bevorzugt kleiner als 5%, bevorzugt kleiner als 2%, bevorzugt kleiner als 1%, bevorzugt kleiner als 0.5%, beträgt, wobei besonders bevorzugt $\rho = \dfrac{n * R}{2(n-1)}$ ist mit $n$ der Brechungsindex des Fasermantels und $R$ der Radius der Faser (3).

4. Verfahren nach einem der vorhergehenden Ansprüche,
   ***dadurch gekennzeichnet, dass***
   die Rayleighlänge $\rho$ über die Wellenlänge des Lasers (1a), die Brennweite der Fokussierungsoptik (2), den Durchmesser des Laserstrahls (1) und/oder die Strahlqualität des Laserstrahls (1) eingestellt wird.

5. Verfahren nach einem der vorhergehenden Ansprüche,
   ***dadurch gekennzeichnet, dass***
   vor der Strukturierung der Faser das optische System (1, 2) so auf die Faser (3) ausgerichtet wird, dass die auf die dem optischen System zugewandte Seite (3a) der Faseroberfläche bezogene Strahltaillenposition $z'$ des an der Faseroberfläche gebrochenen Laserstrahls mit dem Minimum $z'_{min}$ zusammenfällt.

6. Verfahren nach dem vorhergehenden Anspruch,
   ***dadurch gekennzeichnet, dass***
   die auf die dem optischen System zugewandte Seite (3a) der Faseroberfläche bezogene Strahltaillenposition z des durch die Fokussieroptik (2) gestrahlten, noch nicht an der Faseroberfläche gebrochenen Laserstrahls variiert wird zum Ausrichten des optischen Systems (1, 2) auf die Faser (3).

7. Verfahren nach einem der vorhergehenden Ansprüche,
   ***dadurch gekennzeichnet, dass***
   der Laserstrahl (1), die Fokussieroptik (2) und eine Senkrechte auf die Zentralachse der Faser (3) auf eine gemeinsame optische Achse ausgerichtet werden.

8. Verfahren nach einem der vorhergehenden Ansprüche,
   ***dadurch gekennzeichnet, dass***
   vor der Strukturierung die Faser (3) mit ultrakurzen Laserpulsen bestrahlt und die Lumineszenz der Faser detektiert wird zum Ausrichten des optischen Systems (1, 2) auf die Faser (3).

9. Verfahren nach dem vorhergehenden Anspruch,
   ***dadurch gekennzeichnet, dass***
   die Lumineszenz unter einem Winkel von größer als 5°, bevorzugt von größer als 45° zur Zentralachse der Faser oder unter einem Winkel von 90°, also senkrecht zur Zentralachse der Faser, detektiert wird oder dass die Lumineszenz an einem der Faserenden bestimmt wird.

10. Verfahren nach einem der vorhergehenden Ansprüche,
    ***dadurch gekennzeichnet, dass***
    ultrakurze Laserstrahlung mit einer Pulslänge von kleiner als 100 Pikosekunden, bevorzugt kleiner als 10 ps, bevorzugt kleiner als 1 ps, bevorzugt kleiner als 500 fs, bevorzugt kleiner als 100 fs, bevorzugt kleiner als 50 fs zum Ausrichten und/oder zum longitudinalen Strukturieren der Faser verwendet wird.

11. Verfahren nach einem der vorhergehenden Ansprüche,
    ***dadurch gekennzeichnet, dass***
    die lichtleitende Faser (3) eine Stufenindexfaser, eine Gradientenindexfaser, eine mikrostrukturierte Faser, eine Doppelkernfaser oder eine mikrostrukturierte Faser ist.

12. Verfahren nach einem der vorhergehenden Ansprüche,
    ***dadurch gekennzeichnet, dass***
    die lichtleitende Faser (3) eine dotierte oder eine undotierte Faser ist.

13. Verfahren nach einem der vorhergehenden Ansprüche,
    ***dadurch gekennzeichnet, dass***
    die lichtleitende Faser (3) und eine aktive oder eine passive Faser ist.

14. Verfahren nach einem der vorhergehenden Ansprüche,
    ***dadurch gekennzeichnet, dass***
    der Faser (3) eine periodische, eine gechirpt periodische oder eine quasiperiodische Longitudinalstruktur einstrukturiert wird.

15. Verfahren nach einem der vorhergehenden Ansprüche,
    ***dadurch gekennzeichnet, dass***
    die Faser (3) als Fasergitter, insbesondere als Bragg-Fasergitter, Modenkoppler oder Dispersionsgitter, strukturiert wird.

16. Anordnung aufweisend
    einen Laser (1a), eine Fokussieroptik (2) und eine unstrukturierte, durch Laserstrahlung im Bereich ihres Kerns (4) strukturierbare, lichtleitende Faser (3), **dadurch gekennzeichnet, dass** der Laser (1a), die Fokussieroptik (2) und die Faser (3) zur Durchführung eines der in den vorhergehenden Ansprüchen beschriebenen Verfahrens angeordnet und/oder ausgebildet sind.

Fig. 1a

EP 1 906 220 A2

Fig. 1b

Fig. 2a

Fig. 2b

Fig. 3

Fig. 4

13

Fig. 5

Luminescenz-Intensität [bel. Einh.]

Wellenlänge [nm]

Abstand Strahltaille $w_0'$ zur Faseroberfläche 3a

○ — z' = 62.5 μm
⊕ — z' = 91 μm
● — z' = 113 μm

Schreib-strahl L1

Detektor

Faser - OSA

EP 1 906 220 A2